# EUROPEAN PATENT APPLICATION

(11) **EP 2 107 305 A1**
(43) Date of publication of application: **07.10.2009**
(21) Application number: 08103303.7
(22) Date of filing: 01.04.2008
(51) Int. Cl.: F23N 5/00, F23R 3/46, F23R 3/50, F02C 9/28

(54) **Gas turbine system and method**

(71) Applicant: SIEMENS AKTIENGESELLSCHAFT, 80333 München (DE)
(72) Inventor: Nilsson, Ulf, Whetstone, Leicester, LE8 6HN (GB)

(57) **Abstract**

The present invention deals with a gas turbine system (10) and method. The proposed gas turbine system (10) comprises a combustor (14) including at least one burner (28). The burner (28) has means for introducing a fuel (30) into an operating medium (20) comprising a compressed gas containing an oxidant, to facilitate combustion of said fuel (30). In operation, the combustion of said fuel (30) generates a flame (32) and a resulting combustion gas (22). In accordance with the present invention, the proposed gas turbine system (10) includes at least one oxygen sensor (34) disposed at a location (40, 42, 44) downstream of said flame (32), and adapted for measuring an oxygen concentration of the combustion gas (22) at that location (40, 42, 44). Further, the proposed gas turbine system (10) includes means (36) for determining the temperature of said flame (32) based upon the measured oxygen concentration of the combustion gas (22) at the location (40, 42, 44) of said at least one oxygen sensor (34).

## Description

The present invention relates to gas turbines and in particular to the measurement of flame temperature in the combustion chamber of a gas turbine.

During operation of a gas turbine it is required to verify the status (i.e. flame temperature) of the burners in the combustion chamber regularly. Also, during start up of the gas turbine, the occurrence of the flame in the combustion chambers and the flame temperature of the burners needs to be confirmed, or else, the start attempt has to be abandoned. Over time, the flame temperature in a burner of the combustion chamber may drift off compared to any calibrations made during commissioning of the gas turbine. When the status (flame temperature of the burners) of the combustion chamber changes several aspects of the gas turbine performance are affected. These include heat load on the combustion chamber and the turbine blading (for example, the guide vanes and the rotor blades) and emission levels. Increased temperature levels generally reduce component life, while an increased emission level may result in the emission levels exceeding the limits permitted by authorities, which may, in turn, prevent an operator from using the gas turbine.

Detection of a flame and measurement of flame temperature may be carried out in-situ in the combustion chamber using thermocouples or optical techniques. However, such in-situ temperature sensors are exposed to extremely high temperatures and are expensive to install and difficult to access. When using thermocouples at a downstream location in the turbine, where the temperatures are much lower, the flame temperature (or the turbine inlet temperature) is back-calculated from the measured downstream temperature by using the following estimations: the pressure ratio over the turbine (often derived from static pressure measurements and may include pressure drop over the combustor), an estimated average efficiency of the turbine and an estimated polytropic coefficient of expansion for the expansion of the combustion gas. Because of these estimations, it is highly likely that errors are present when calculating the flame temperature using a lower temperature from a downstream location in the turbine.

It is an object of the invention to provide an improved system and method for detection of a flame and measurement of flame temperature in a gas turbine.

The above object is achieved by a gas turbine system, comprising:
- a combustor including at least one burner having means for introducing a fuel into an operating medium comprising a compressed gas containing an oxidant, to facilitate combustion of said fuel, the combustion of said fuel generating a flame and a resulting combustion gas,
- sensing means comprising at least one oxygen sensor disposed at a location downstream of said flame, and adapted for measuring an oxygen concentration of the combustion gas at that location, and
- means for determining the temperature of said flame based upon the measured oxygen concentration of the combustion gas at the location of said at least one oxygen sensor.

The above object is achieved by a method for measurement of temperature of a flame produced in a burner in a combustor of a gas turbine, comprising:
- measuring an oxygen concentration of a combustion gas at a location downstream of said flame, said combustion gas resulting from the combustion of a fuel in said burner, and
- determining the temperature of said flame based upon the measured oxygen concentration of the combustion gas at said location.

The underlying idea is to provide a convenient way for measuring flame temperature in a gas turbine by using oxygen sensors sensing the oxygen concentration of the combustion gas downstream of the combustion chamber, and using the measured oxygen concentration to calculate the flame temperature (i.e. temperature of combustion of the fuel) at one or more burners in the combustion chamber. The proposed system and method allow the flame temperature to be measured from a remote and protected location which is easy to access, using comparatively inexpensive instrumentation.

In a preferred embodiment, the location of said at least one oxygen sensor corresponds to a peak in a radial temperature profile of the combustion gas in said gas turbine system. It has been observed that the chemical composition of the combustion gas is substantially preserved at locations which represent a temperature peak in the cross-section of the turbine system. This location, being in an oxygen depleted region, also offers the most accurate measurement of the flame temperature.

In one embodiment of the present invention, the combustion chamber comprises an annular combustion chamber having multiple burners circumferentially arranged around a rotation shaft and adapted to generate multiple flames, wherein said sensing means comprises multiple oxygen sensors disposed at said location downstream of the combustion chamber, and arranged circumferentially corresponding the circumferential arrangement of said multiple burners, further wherein a difference in flame temperatures between a pair of burners is calculated based upon a difference in measured oxygen concentration by a corresponding pair of oxygen sensors. In another embodiment, the combustor comprises multiple combustion chambers circumferentially arranged around a rotation shaft, each combustion chamber having at least one burner adapted to generate a flame, wherein said sensing means comprises multiple oxygen sensors arranged circumferentially around said rotation shaft at said location downstream of the flames, further wherein a difference in flame temperatures between a pair of burners is calculated based upon a difference in measured oxygen concentration by a corresponding pair of oxygen sensors. The above feature of the present invention is useful in ensuring that the multiple burners of the combustion chamber have a substantially uniform flame temperature.

In one embodiment, the at least one oxygen sensor is located adjacent to a turbine blade in a turbine portion of said gas turbine system. In another embodiment, said gas turbine system comprises multiple turbines, wherein said at least one oxygen sensor is located at an intermediate passage between two adjacent turbines. These locations provide convenient measurement of oxygen concentration as the circumferential translation of the combustion gas is greatly reduced or absent in such locations.

In a further embodiment, the gas turbine system further comprises means for adjusting fuel flow in at least one burner of said combustor, based upon the determined temperature of the flame of said burner. This advantageously ensures a uniform temperature distribution (circumferential and/or radial) in the combustion gas, which maximizes component life and reduces emissions levels.

In a specific embodiment of the present invention, the oxygen sensor is an air-to-fuel ratio sensor adapted to generate, as output, an air-to-fuel ratio of the combustion gas from the measured oxygen concentration, further wherein said means determining the temperature of the flame is adapted to determine the temperature of said flame based on a correlation between the temperature of combustion for said fuel and an air-to-fuel ratio of the resulting combustion gas.

The present invention is further described hereinafter with reference to illustrated embodiments shown in the accompanying drawings, in which:
FIG 1 is a schematic illustration of a longitudinal cross-section of the significant components of a gas turbine system, and
FIG 2 is a graphical illustration of a radial combustion gas temperature profile through the gas turbine system.

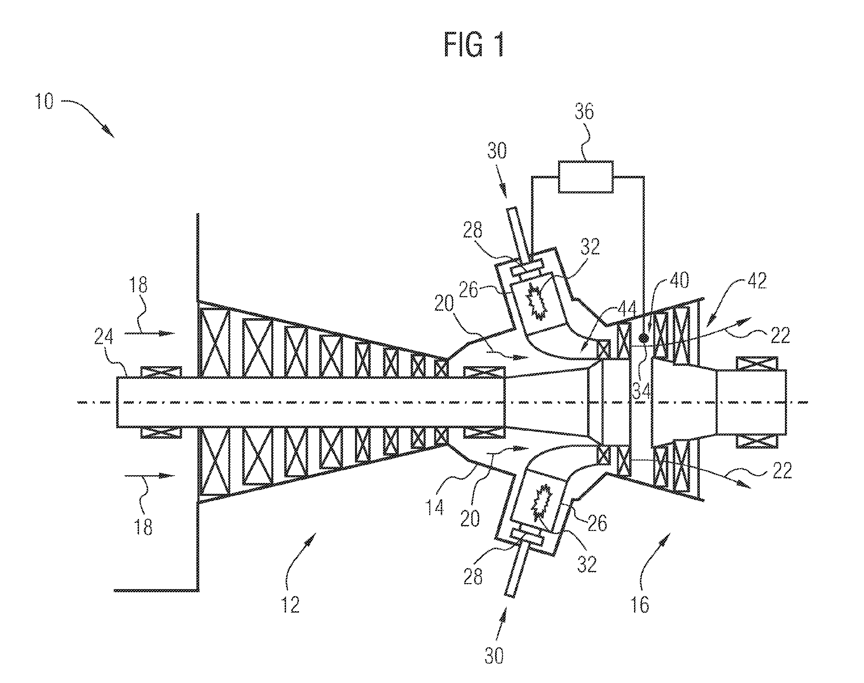

Referring to FIG 1, components of a gas turbine system 10 are illustrated in accordance with one embodiment of the present invention. The gas turbine system 10 broadly includes a compressor portion 12, a combustor 14 and a turbine portion 16 connected to a rotation shaft 24. In operation, an inlet gas 18 containing an oxidant is compressed at the compressor portion 12 to form a compressed gas 20 with the oxidant, which serves as the operating medium in the combustor 14. In the illustrated embodiment, the combustor 14 has multiple can type combustion chambers 26 having burners 28 with means for supplying a fuel 30 and for introducing the fuel 30 to the operating medium comprising compressed air 20. The fuel 30, upon mixing with the compressed gas 20 containing the oxidant, undergoes combustion, to produce a flame 32 and resultant hot combustion gas 22, which is expanded downstream by the turbine portion 16 to produce mechanical work.

In accordance with the present invention, the occurrence of combustion (i.e. the occurrence of the flame 32) and the temperature of the flame 32 (also referred to herein as 'flame temperature') are determined by measuring the oxygen concentration of the combustion gas 22. The inventive idea is based on the fact that the chemical composition of the combustion gas 22 is largely preserved after the combustion has taken place, even after little or moderate dilution by injecting air. Gas turbine configurations with closed or partly closed cooling systems using air or steam as cooling medium will generate even lesser dilution of the combustion gas 22. Furthermore, in case of high efficiency turbines, mixing during the expansion of the combustion gas 22 through the vanes and rotor blades in the turbine portion, particularly in the center portion, is low, thus preserving the composition of the combustion gas 22. To implement the proposed idea, a sensing means comprising an oxygen sensor 34 is disposed at a location 40, downstream of the flame 34, to measure the oxygen concentration of the combustion gas 22 at that location. The measured oxygen concentration is then fed to a means 36 that determines the temperature of the flame based on a correlation between oxygen concentration and flame temperature as discussed below. Hence, by measuring the oxygen concentration of the combustion gas 22 at any location downstream of the flame 32, it is possible to determine the temperature of the flame 32.

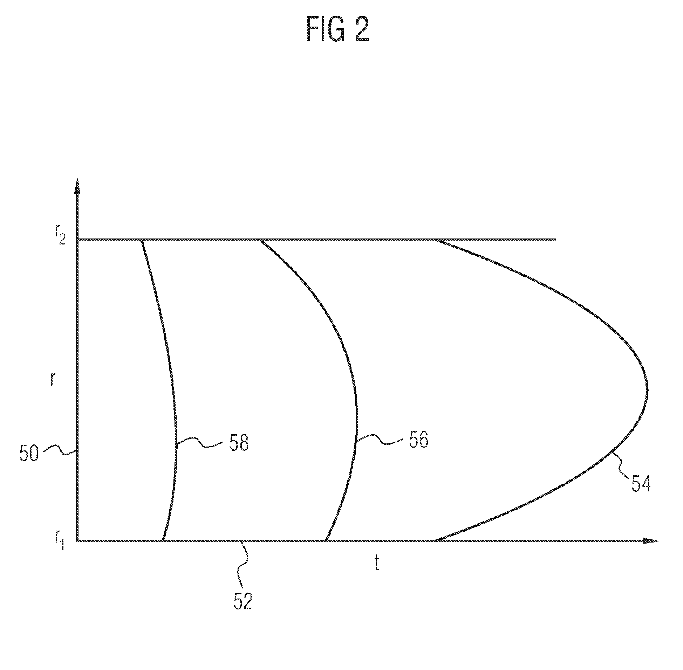

It has been observed that the chemical composition of the combustion gas 22 is substantially preserved at locations which represent a temperature peak in the cross-section of the turbine system. This location, being in an oxygen depleted region, also offers the most accurate measurement of the flame temperature. FIG 2 shows a traces 54, 56 and 58 that illustrates the variation of temperature 't' of the combustion gas 22 (represented along the axis 52) in the radial direction represented along the axis 50. The radius 'r₁' corresponds to an inner radius and the radius `r₂' corresponds to an outer radius of the turbine portion or the combustor outlet. The trace 54 shows the radial temperature profile of the combustion gas at the outlet of the combustion chamber 26 (i.e., the location indicated by the numeral 44 in FIG 1). The trace 56 shows the radial temperature profile of the combustion gas at an intermediate passage between two turbines (i.e., the location indicated by the numeral 40 in FIG 1). The trace 58 shows the radial temperature profile of the combustion at a location downstream of the last stage of the turbine portion (i.e., the location indicated by the numeral 42 in FIG 1). As can be seen from FIG 2, the radial temperature profiles at the above locations show a peak near about the center of the combustion chamber. Hence, the radial location of the oxygen sensor should correspond to the temperature peak at that downstream location in which the oxygen sensor is intended to be disposed. Since any combustion process results in a decrease in oxygen concentration, by measuring the oxygen concentration in the region where the temperature profile in the turbine has its peak, it is possible to detect whether a combustion process has occurred upstream of the measuring point and to further determine the temperature of the resulting flame.

Referring back to FIG 1, the combustor 14 comprises a group of components forming the combustion system, or the area of the gas turbine system 10 where the combustion takes place. A combustor may be of two kinds, namely, can type or annular type. In the illustrated embodiment, the combustor 14 is a can type combustor comprising multiple combustion chambers 26 (also called combustor cans), each having one or more burners 28 for generating a flame 32 as mentioned above. These combustion chambers or cans 26 are circumferentially arranged around the rotation shaft 24. The advantage of can type combustors is that the cans can be easily removed for maintenance and provide convenient plumbing for fuel. In an alternate embodiment, the combustor may be of an annular-type, comprising a combustion chamber that forms an annulus around the rotation shaft. The annular combustion chamber comprises multiple burners circumferentially arranged around the rotation shaft, generating multiple flames. The proposed idea may be extended to measure differences in flame temperatures between multiple burners, the circumferential arrangement of which, may, for example, take the form of a so called annular combustion chamber or a so called can type combustor comprising several can shaped combustion chambers each with one or more burners.. In this case, the sensing means comprises multiple oxygen sensors arranged circumferentially corresponding to the circumferential arrangement of the burners. Herein, the means 36 is adapted to calculate the difference in flame temperatures between a pair of burners, which is calculated based upon a difference in measured oxygen concentration by a corresponding pair of oxygen sensors. The output from the means 36 may be used to adjust the fuel flow in individual burners to maintain a uniform flame temperature across all the burners. This helps to achieve a circumferentially uniform temperature distribution of the combustion gas, which, in turn, minimizes emission levels and increases the life of the turbine components that are exposed to the hot combustion gas.

In a preferred embodiment of the present invention, the oxygen sensor 34 is an air-to-fuel ratio sensor, also referred to as an A/F ratio sensor. An A/F ratio sensor is adapted to generate, as output, an air-to-fuel ratio of the combustion gas 22 from the measured oxygen concentration. Herein the means 36 adapted to calculate flame temperature using a correlation based on air-to-fuel ratio (also known as 'Lambda') and temperature of combustion for a particular fuel. The value of 'Lambda' equals 1 when the stoichiometric ratio of air to fuel is 14.7:1. When 'lambda' equals 1, it indicates that all the oxygen in the operating medium (air) has taken part in the combustion and the maximum temperature for that particular fuel has been reached. In gas turbines, the value of 'Lambda' is usually higher than 1, particularly for those gas turbines operating with DLE (dry low emissions) systems. During start up, the gas turbine may be operating in a diffusion flame mode showing 'lambda' values near 1, or even less than 1, for shorter periods of time before the combustion process has stabilized and acceleration up to idle mode can commence.

The A/F ratio sensor used herein should preferably be capable of measuring a wide range of 'Lambda' values, for example from 0.7 to 4 or more. This would capture the values of 'Lambda' expected in a gas turbine. An example of such an A/F sensor is a wideband sensor as disclosed in the European Patent No. EP0437433-B1.

As mentioned above, because the composition of the combustion gas is largely preserved, the oxygen sensor (or multiple sensors) may be placed in any location downstream of the flame 32 where it is in contact with the products of combustion with a low or moderate dilution of air. Thus the location may be any location between the outlet of the combustion chamber 26 and the exhaust of the turbine portion 16. In the illustrated example, the gas turbine system 10 comprises more than one turbines and the oxygen sensor 34 is placed in the location 40 at an intermediate passage between two turbines. Alternatively, the oxygen sensor 34 may be placed in a location adjacent to a turbine blade in a passage between a turbine blade and a guide vane within the turbine portion 16. Alternately, for convenience of access and servicing, the oxygen sensor/sensors may be placed at the location 42 after the last stage of the turbine portion 16. Still alternately, the oxygen sensor/sensors may also be placed at a location 44 at the outlet of the combustion chambers 26.

In a single shaft gas turbine operating at a constant speed, the exhaust flow, at part load, will exhibit a circumferential translation, i.e. the flow of combustion gas from a given burner will enter the exhaust diffuser at a different clockwise or anti-clockwise position (depending on the design) relative to the burner, which depends on the turbine load and the operating conditions. If the proposed oxygen sensor is installed at the location 42 on a single shaft gas turbine, the above variation needs to be appropriately accommodated while taking the measurements. Further, in case of most single shaft gas turbines, the exhaust temperature is below 600 degrees Celsius. The wideband sensor referred above requires a temperature of above 600 degrees Celsius to provide accurate measurements, and thus needs to be preheated using an electrical heater for measuring temperatures below 600 degrees Celsius. If the oxygen sensor 34 is installed within the turbine portion 16 at an upstream location relative to the last stage, i.e. in an intermediate stage, the circumferential translation described above is reduced and the measurement simplified since the change translation is greatest for the last stage

If a gas turbine system comprises more than one turbine, for example at least one gas generator/compressor turbine and at least one power turbine, the oxygen sensor/sensors should preferably be installed between two of the turbines. If the turbine upstream of the oxygen sensor/sensors is operating at variable speed, the circumferential translation described for single shaft turbines is significantly reduced, and may, under some circumstances, not show at all. Furthermore, the turbine inlet temperature to a power turbine is typically in the range of 500 to 1000 degrees Celsius, and hence within the operating range of the oxygen sensor, which, in such a case would not require preheating during operation.

The present invention is advantageous in a number of ways. First of all, flame temperature measurement and flame monitoring can be carried out from a remote and protected location, which is easier to access and calls for relatively inexpensive instrumentation. Importantly, the measure parameter, i.e. oxygen, is preserved and does not change over time or during the flow from the flame to the sensor probe. When using thermocouples, the flame temperature or the turbine inlet temperature is back-calculated from the measured downstream temperature by using the following estimations: the pressure ratio over the turbine (often derived from static pressure measurements and may include pressure drop over the combustor), an estimated average efficiency of the turbine and an estimated polytropic coefficient of expansion for the expansion of the combustion gas. Because of these estimations, it is highly likely that errors are present when calculating the flame temperature using a lower temperature from a downstream location in the turbine. Such errors due to estimation can be avoided using the present invention. Another advantage of the present invention lies in the fact that flame detection and flame temperature measurement can be done using the same probe. This is because the translation time of the combustion gas from the flame to the sensor probe is typically a fraction of a second. A still further advantage of the present invention is the possibility of incorporating oxygen sensor/sensors in the thermocouple rakes or probes already used in existing gas turbines. This would further reduce complexity (number of access holes in the casting, wiring, etc.), cost and maintenance times.

Summarizing, the present invention deals with a gas turbine system and method. The proposed gas turbine system comprises a combustor including at least one burner. The burner has means for introducing a fuel into an operating medium comprising a compressed gas containing an oxidant to facilitate combustion of said fuel. In operation, the combustion of said fuel generates a flame and a resulting combustion gas. In accordance with the present invention, the proposed gas turbine system includes at least one oxygen sensor disposed at a location downstream of said flame, and adapted for measuring an oxygen concentration of the combustion gas at that location. Further, the proposed gas turbine system includes means for determining the temperature of said flame based upon the measured oxygen concentration of the combustion gas at the location of said at least one oxygen sensor, thus at the same time, monitoring the existence of said flame.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A gas turbine system (10), comprising:
- a combustor (14) including at least one burner (28) having means for introducing a fuel (30) into an operating medium(20) comprising a compressed gas containing an oxidant, to facilitate combustion of said fuel (30), the combustion of said fuel (30) generating a flame (32) and a resulting combustion gas (22),
- sensing means comprising at least one oxygen sensor (34) disposed at a location (40, 42, 44) downstream of said flame (32), and adapted for measuring an oxygen concentration of the combustion gas (22) at that location (40, 42, 44), and
- means (36) for determining the temperature of said flame (32) based upon the measured oxygen concentration of the combustion gas (22) at the location (40, 42, 44) of said at least one oxygen sensor (34).

2. The gas turbine system (10) according to claim 1, wherein the location (40, 42, 44) of said at least one oxygen sensor (34) corresponds to a peak (56) in a radial temperature profile of the combustion gas (22) in said gas turbine system (10).

3. The gas turbine system (10) according to any of the preceding claims, wherein said combustor (14) comprises an annular combustion chamber having multiple burners circumferentially arranged around a rotation shaft and adapted to generate multiple flames, wherein said sensing means comprises multiple oxygen sensors (34) disposed at said location (40, 42, 44) downstream of said flames (32), and arranged circumferentially corresponding the circumferential arrangement of said multiple burners (28), further wherein a difference in flame temperatures between a pair of burners (28) is calculated based upon a difference in measured oxygen concentration by a corresponding pair of oxygen sensors (34).

4. The gas turbine system (10) according to any of the preceding claims, wherein said combustor (14) comprises multiple combustion chambers (26) circumferentially arranged around a rotation shaft (24), each combustion chamber (26) having at least one burner (28) adapted to generate a flame (32), wherein said sensing means comprises multiple oxygen sensors (34) arranged circumferentially around said rotation shaft (24) at said location (40, 42, 44) downstream of the flames (32), further wherein a difference in flame temperatures between a pair of burners (28) is calculated based upon a difference in measured oxygen concentration by a corresponding pair of oxygen sensors (34).

5. The gas turbine system (10) according to any of claims 1-4, wherein said at least one oxygen sensor (34) is located adjacent to a turbine blade in a turbine portion (16) of said gas turbine system (10).

6. The gas turbine system (10) according to any of claims 1-4, said gas turbine system (10) comprising multiple turbines, wherein said at least one oxygen sensor (34) is located at an intermediate passage between two adjacent turbines.

7. The gas turbine system (10) according to any of the preceding claims, further comprising means for adjusting fuel flow in at least one burner (28) of said combustor (14), based upon the determined temperature of the flame (32) of said burner (28).

8. The gas turbine according to any of the preceding claims, wherein said oxygen sensor (34) is an air-to-fuel ratio sensor (34) adapted to generate, as output, an air-to-fuel ratio of the combustion gas (22) from the measured oxygen concentration, further wherein said means determining the temperature of the flame (32) is adapted to determine the temperature of said flame (32) based on a correlation between the temperature of combustion for said fuel (30) and an air-to-fuel ratio of the resulting combustion gas (22).

9. A method for measurement of temperature of a flame (32) produced in a burner (28) in a combustor (14) of a gas turbine system (10), comprising:
- measuring an oxygen concentration of a combustion gas (22) at a location (40, 42, 44) downstream of said flame (32), said combustion gas (22) resulting from the combustion of a fuel (30) in said burner (28), and
- determining the temperature of said flame (32) based upon the measured oxygen concentration of the combustion gas (22) at said location (40, 42, 44).

10. The method according to claim 9, wherein the location (40, 42, 44) of said measurement of oxygen concentration corresponds to a peak in a radial temperature profile of the combustion gas (22) in said gas turbine system (10).

11. The method according to any of claims 9 and 10, wherein said measurement of oxygen concentration is carried out at a location adjacent to a turbine blade of the gas turbine system (10).

12. The method according to any of claims 9 and 10, wherein the gas turbine system (10) comprises multiple turbines, wherein said measurement of oxygen concentration is carried out at a location in an intermediate passage between two adjacent turbines.

13. The method according to any of claims 9 to 12, further adjusting fuel flow in said burner (28), based upon the determined temperature of the flame (32) of said burner (28).
